Europäisches Patentamt

**European Patent Office**

**Office européen des brevets**

(19)

(11) Veröffentlichungsnummer: **0 112 440**
A2

(12) # EUROPÄISCHE PATENTANMELDUNG

(21) Anmeldenummer: **83109058.4**

(22) Anmeldetag: **14.09.83**

(51) Int. Cl.³: **G 01 S 5/16, G 01 S 5/00**

(30) Priorität: **30.11.82 DE 3244255**

(43) Veröffentlichungstag der Anmeldung: **04.07.84**
**Patentblatt 84/27**

(84) Benannte Vertragsstaaten: **CH FR GB IT LI SE**

(71) Anmelder: **Messerschmitt-Bölkow-Blohm GmbH,
Hünefeldstrasse 1-5, D-2800 Bremen 1 (DE)**

(72) Erfinder: **Boeck, Hans-Joachim, Yorckstrasse 72a,
D-2870 Delmenhorst (DE)**
Erfinder: **Fryen, Jürgen, Dipl.-Ing., Hinter den Höfen 35a,
D-2803 Weyhe (DE)**
Erfinder: **Meyer, Ulrich, Feldhäuserstrasse 71,
D-2804 Lilienthal (DE)**

(74) Vertreter: **Schramm, Ewald Werner Josef,
Messerschmitt-Bölkow-Blohm GmbH Patentabteilung
TW63 (TWB32) Postfach 10 78 45, D-2800 Bremen 1 (DE)**

(54) **Bahnvermessungs- und Überwachungssystem.**

(57) Die Erfindung bezieht sich auf ein Bahnvermessungs- und Überwachungssystem zur Erfassung und Bewertung von Bahnen sich bewegender Objekte (Luftfahrzeuge, Landfahrzeuge, Wasserfahrzeuge). Die jeweiligen Objekte werden mit mehreren autonomen, räumlich verteilten, mobilen und weitgehend automatischen Bahnkontrollstationen, welche optronische Sensoren aufweisen, erfaßt und verfolgt. Ein Bahnkontrollzentrum steht dabei über ein Informationsverteilungs- und Verknüpfungssystem mit den Bahnkontrollstationen in gegenseitiger Funktionsverbindung.

EP 0 112 440 A2

8223-50                            2800 Bremen, den 29.11.1982

---

Bahnvermessung- und Überwachungssystem

---

Die Erfindung bezieht sich auf ein Bahnvermessungs- und Überwachungssystem zur Erfassung und Bewertung von Bahnen sich bewegender Objekte.

Zur Bewertung von Bahnen auf welchen Objekte sich bewegen, ist es notwendig diese Objekte mit entsprechenden Geräten zu erfassen und zu verfolgen. Es ist bekannt, hierfür Radargeräte zu benutzen, die aber zu keinen befriedigenden Ergebnissen führen. Bei den sich bewegenden Objekten kann es sich um fliegende Objekte ( Flugzeuge, Raketen usw. ) schwimmende Objekte oder um Landfahrzeuge handeln. Um eine einwandfreie Erfassung und Bewertung der Bahnen, welchen diese Objekte folgen, zu bekommen, ist es notwendig eine Vermessung von verschiedenen Stationen vorzunehmen, wodurch sich die Möglichkeit ergibt eine Erfassung nach der sog. Triangulation durchzuführen. Eine derartige Erfassung verlangt aber eine synchrone Steuerung der einzelnen Stationen und erfordert daher entsprechende Verbindungen zwischen diesen Stationen.

Neben der Erfassung mit Hilfe von Radargeräten sind auch schon Geräte vorgeschlagen worden, die auf optischer Basis arbeiten z. B. bildgestützte Systeme oder Systeme mit Lasern. Beide Systeme haben aber ebenfalls noch keine befriedigende Ergebnisse erbracht, da insbesondere die Nachführung dieser Geräte bei schnellen Objekten wie Luftfahrzeugen problematisch ist.

Der Erfindung liegt daher die Aufgabe zugrunde ein Bahnvermessung- und Überwachungssystem zu schaffen, das in der Lage ist, sich bewegende Objekte witterungsunabhängig sicher zu erfassen und bei jeder Geschwindigkeit zu verfolgen und die erfaßten Daten auszuwerten. Gemäß der Erfindung ist diese Aufgabe dadurch gelöst, daß mehrere autonome, räumlich verteilte, mobile und weitgehend automatische Bahnkontrollstationen optronische Sensoren zur Objekterfassung und Verfolgung aufweisen und daß die Bahnkontrollstationen über ein Informationsverteilungs- und Verknüpfungssystem zur Echtzeitverarbeitung untereinander und mit einem Bahnkontrollzentrum zur Koordination in Verbindung stehen.

Diese Maßnahme gestattet eine Erfassung und Verfolgung von Objekten und eine Auswertung der Bahnen in Echtzeit. Dabei können auch nahe aneinander sich bewegende Objekte erfaßt und verfolgt werden, sowie bestimmte kurzzeitige Ereignisse wie Start, Aufprall und Auslösungsvorgänge. Erfaßte Objekte können dabei äußerst genau sowohl in großen Höhen als auch in mittleren und sehr geringen Höhen verfolgt werden, insbesondere auch in Seegebieten. Die Echtzeitverarbeitung gestattet dabei Bewertungen vorzunehmen während eines Testvorganges oder unmittelbar danach. Hierdurch ergibt sich der Vorteil unmittelbar vorliegender Test- oder Betriebsergebnisse bei geringen Aufwand. Diese Tatsache bietet auch den Vorteil, die erzielten Ergebnisse bei nachfolgenden Einsätzen zu berücksichtigen.

Die einzelnen Stationen können dabei mit einem Mehrfach-Sensorsystem, wovon jeweils das für den Betrieb am besten geeignete ausgesucht wird, versehen sein. Auf diese Weise kann eine objektgerechte, missionsspezifische und den Bedingungen der Umwelt Rechnung tragende Erfassung und Verfolgung der Objekte erzielt werden.

Die Erfindung wird anhand der beiliegenden Zeichnung näher erläutert. Es zeigen:

Fig. 1 ein Bahnvermessungs- und Überwachungssystem im Einsatz,

Fig. 2 eine mobile Bahnkontrollstation,

Fig. 3 einen Objektträger und

Fig. 4 ein Blockschaltventil für das Bahnvermessungs- und Überwachungssystem.

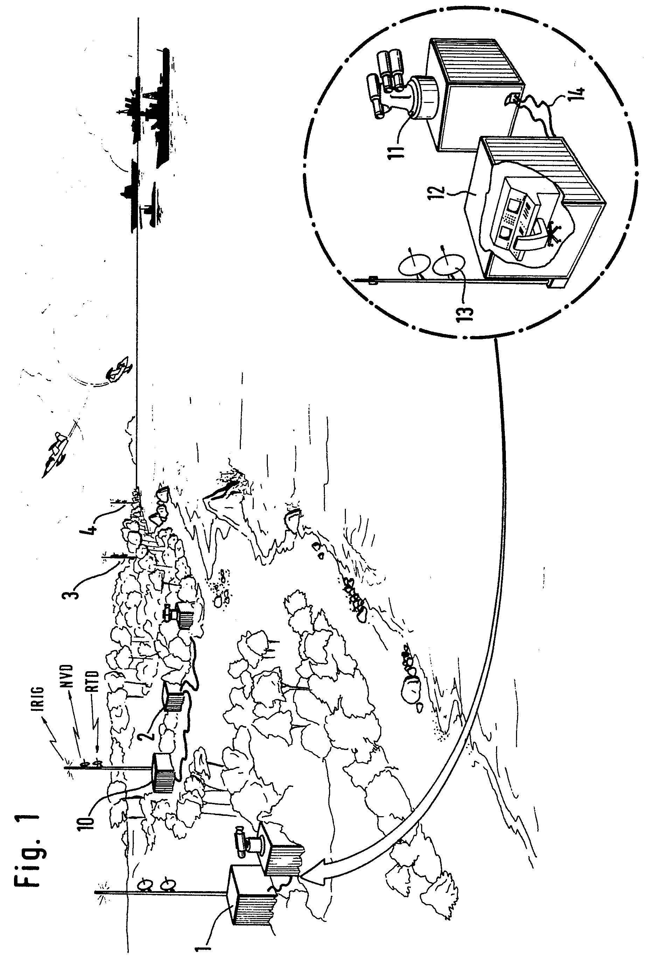

Wie die Darstellung nach Fig. 1 zeigt, besteht das Bahnvermessungs- und Überwachungssystem aus mehreren Bahnkontrollstationen 1,2,3,4 und einem Bahnkontrollzentrum 10. Jede Bahnkontrollstation besteht ihrerseits aus einem Objektträger 11 und einer Kontroll- und Führungseinheit 12, Die kontroll- und Führungseinheit kommuniziert über ein Informations-und Verknüpfungssystem 13, mit den anderen Stationen, insbesondere mit dem Kontrollzentrum 10. Außerdem steuert die Kontroll- und Führungseinheit 12 über Kabel 14 den jeweiligen Objektträger 11 und zwar mit Hilfe geeigneter Steuer- und Regelkreise und Sensoren, welche die Positionen der auf dem Objektträger 12 angeordneten optronischen Sensoren erfassen.

Wie bereits erwähnt, besteht jede Bahnkontrollstation aus dem Objektträger 11 und der Kontroll- und Führungseinheit 12. Diese beiden Baueinheiten sind jeweils in Containern untergebracht und auf ein Fahrzeug 15 bzw. eine Lafette 16 absetzbar. Die Stationen erhalten auf diese Weise eine Mobilität und können so zu den jeweiligen Einsatzorten tansportiert werden.

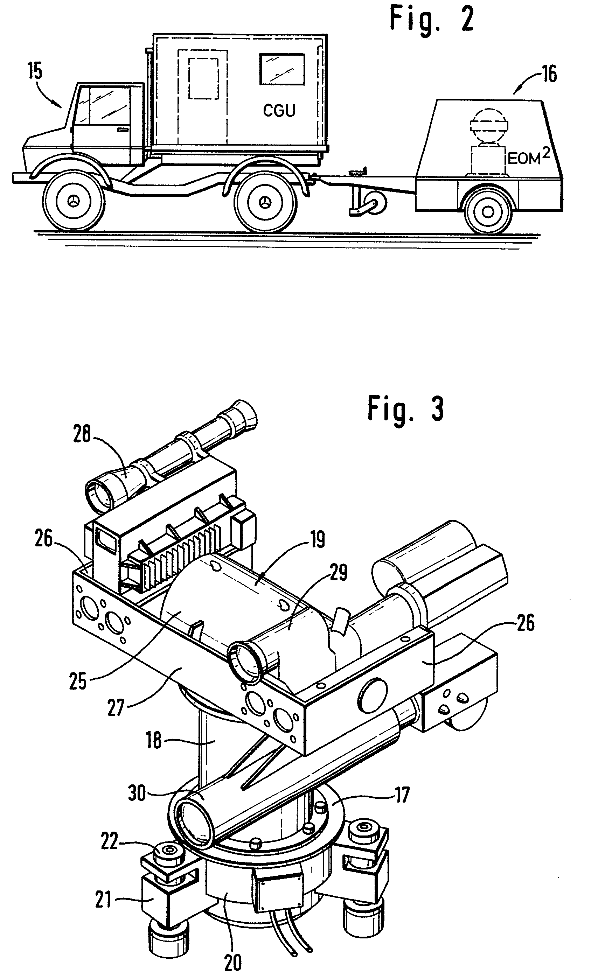

Der Aufbau eines Objektträger 11 ist in Fig 3 näher dargestellt. Dabei ist zu erkennen, daß der Objektträger 11 aus drei trennbaren Baugruppen besteht und zwar einer als Sockel ausgebildeten Azimuteinheit 17, einem darauf angeordneten Ständer 18 und einer auf diesem aufgesetzten Elevationseinehit 19. Die Azimuteinehit 17 besteht aus einem geschlossenen Lagergehäuse 20 mit drei sternförmig angeordneten und Justiereinrichtungen 22 aufweisenden Stützfüßen 21. Innerhalb des durch einen Lippenrichtring reibungsarm abgedichteten Lagergehäuses befindet sich ein Antriebsmotor, ein Tachogenerator, ein Lager, eine Kodiereinrichtung für eine als Hohlachse ausgebildete Achse zur Azimutausrichtung der auf der Elevationseinheit angeordneten optronischen Sensoren. Die in einem Lager hoher Steifigkeit gelagerte Hohlachse dient dabei gleichzeitig als Kabelführung für die Elevationseinheit 19. Zweckmäßig ist es dabei, auch den Antriebsmotor und die Kodiereinrichtung direkt an der Hohlachse anzuflanschen.

Für den Ständer 18, der über die Hohlachse gestreift wird, können dünnwandige Rohre aus witterungsbeständigem Werkstoff benutzt werden, um damit einen Schutz gegen Umwelteinflüsse wie starke Sonneneinstrahlung, Feuchtigkeit usw. zu erzielen. Je nach Einsatzforderung kann dabei der Ständer 18 bzw. die darin angeordneten Hohlachse wahlweise mit Bauteilen unterschiedlicher Länger bestückt werden. Hierbei ist es sinnvoll für die Anschlüsse planparallel geschliffene Flansche einzusetzen, wodurch sich beim Austausch keinerlei Genauigkeitsprobleme für die Azimuteinheit 17 bzw. die Elevationseinheit 19 ergeben.

Die auf den Ständer 18 aufgesetzte Elevationseinheit 19 besteht aus einem Elevationslagerbock 25, in dem eine durchgehende Elevationsachse mit direkt angeflanschtem Motor, Tachogenerator und Kodiereinrichtung gelagert ist. An diesem Elevationslagerbock 25 sind Paßplatten vorgesehen, und zwar zwischen sich und dem Ständer 18 sowie auf beiden Stirnseiten. Diese Maßnahme dient der Genauigkeitserhaltung beim Austausch von Bauteilen. An beiden Stirnseiten der Elevationsachse sind je ein Sensorträger 26 fest angeflanscht, welche durch einen Steg 27 brückenartig miteinander verbunden sind. Auf diese Sensorträger 26 sind optische Sensoren 28,29,30 aufgesteckt, deren Signale über Kabel zur Kontroll- und Führungseinheit 12 gelangen. Diese optronischen Sensoren können von der Kontroll- und Führungseinheit 12 bezüglich bestimmter Parameter, wie Fokussierung, Grauwertpegel, Polarität, Kontrast, Filterung usw. automatisch gesteuert und an die jeweilige Umweltsituation optimal angepaßt werden. Außerdem steuert die Kontroll- und Führungseinheit 12 die Position und Richtung der optronischen Sensoren 28, 29, 30, wobei am Objektträger 11 lediglich die zur Einstellung notwendigen Stellorgane vorgesehen sind, die auch von der Kontroll- und Führungseinheit mit Energie versorgt werden.

Jede Kontroll- und Führungseinheit 12 ist daher grundsätzlich mit den elektronischen Einheiten zur Kontrolle des Objektträgers 11 und der darauf angeordneten Sensoren ausgerüstet. Die je nach Aufgabe aktuelle Kontrolle kann dabei durch Dateneingabe und Verarbeitung mit Rechnern in den einzelnen Kontrollstationen 12 oder zentral vom Kontrollzentrum 10 vorgenommen werden. Die auf dem Objektträger angeordneten Sensoren werden dabei durch die in der Kontroll- und Führungseinheit 12 untergebrachten elektronischen Einheiten vollständig kontrolliert ( prüfen, eichen, einstellen, überwachen, führen ). Dazu ist jede Kontroll- und Führungseinheit 12 wie in Fig. 1 zu erkennen mit einer Bedieneinheit ( Eingabetastatur ) und Anzeigegeräten versehen, die eine rechnergesteuerte Vor- und Nachbehandlung erfaßter Bahn- und / oder Sensordaten mit Ausgabe eines schriftlichen Protokolls ermöglichen. Jede Kontroll- und Führungsstation 12 kann dabei zusätzlich mit elektronischen Steuergeräten zur manuellen und / oder automatischen Nachführung erfaßter Objekte versehen sein. Die jeweils erfaßten Objekte können dann auf Video-Monitoren dargestellt, auf Video-Nachführgeräten verfolgt werden, wobei die erfaßten Video-Informationen für eine nachfolgende Auswertung auch aufgezeichnet werden können. Selbstverständlich kann die Erfassung und Nachführung auch mit rechnergesteuerten Geräten automatisch erfolgen. Die elektronische Ausrüstung der Kontroll- und Führungseinheiten 12 sowie des Kontrollzentrums 10, sind dabei mit Baustufen für eine phasengerechte, synchrone und ereignisgesteuerte Datenverarbeitung aller erfaßten Bahndaten versehen.

Es ist daher möglich, bestimmte kurzzeitige Ereignisse wie Start, Aufschlag und Auslösung zu erfassen und besonders auszuwerten. Die ereignisgesteuerte Datenverarbeitung kann langzeitig in Abhängigkeit einer hochgenauen mit einer Referenzzeit verglichenen Uhr erfolgen oder durch diskrete Ereignisse z. B. Impulse des erfaßten Objektes die allen Kontroll- und Führungseinheiten 12 zugänglich sind. Eine ereignisgesteuerte Datenverarbeitung kann auch durch quasi kontinuierliche Ereignisse erfolgen, die über das Informationsverteilungs- und Verknüpfungssystem 13 allen Kontroll- und Führungseinehiten 12 z. B. vom Kontrollzentrum 10 zugeleitet werden. Es ist aber auch möglich, eine solche Steuerung über eine Satellitenfunkverbindung vorzunehmen oder über ein vorhandenes terristisches überörtliches Sendersystem z. B. Video oder Navigation.

Die elektronische Ausrüstung der Kontroll- und Führungseinheiten 12, sowie des Kontrollzentrums 10 ist dabei so ausgebildet, daß eine Übertragung der Informationen über das Informationsverteilungs- und Verknüpfungssystem 13 mit Informationspaketen erfolgt, die an den jeweiligen Stationen zusammengefaßt, verschlüsselt und ausgesendet werden.

Das Informationsverteilungs- und Verknüpfungssystem kann dabei ein drahtloses System ( Funkverbindung ) sein oder ein System mit Kabelverbindung ( Koaxialkabel, Lichtleitfasern ).

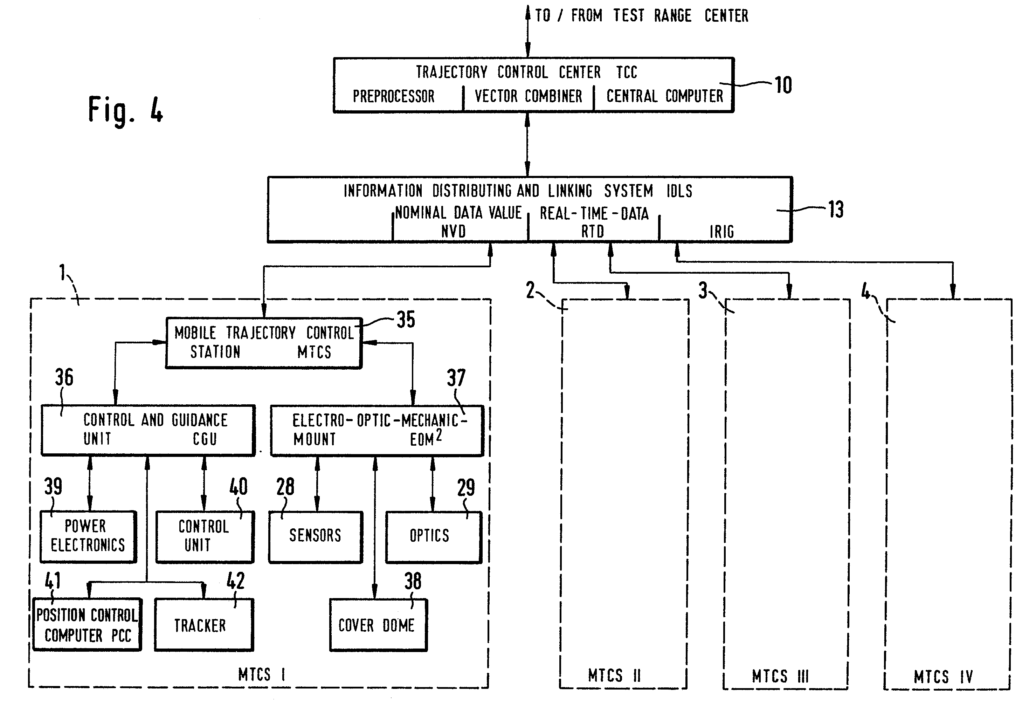

Fig. 4 zeigt ein Blockschaltbild aus welchem die Verbindung der einzelnen Stationen untereinander zu erkennen ist. Das Bahnkontrollzentrum 10 besteht dabei aus einem Zentralrechner, einem Vorprozessor und einem Vektorkombinierer, die alle ihre notwendigen Daten vom Informationsverteilungs- und Verknüpfungssystem erhalten bzw. Informationen an dieses abgeben. Das Informationsverteilungs- und Verknüpfungssystem 13 stellt die Verbindung zu den einzelnen Bahnkontrollstationen 1,2,3,4 her, wobei diese Informationen Nominalinformation (NVD) Realzeitdaten (RTD) und Zeitdaten (IRIG) zur Synchro-

---

nisation aller Stationen enthalten.Jede der Bahnkontrollstationen 1, 2,3,4 besteht aus entsprechenden Sendeempfängern 35,welche jeweils mit dem zugeordneten Steuer- und Führungssystem 36 bzw. den Ausgangsstufen 37 der auf dem Objektträger 11 angeordneten optronischen Sensoren 28,29,30 in gegenseitiger Funktionsverbindung stehen.Die Ausgangsstufen 37 steuert darüber hinaus auch noch die Verschlußeinrichtungen 38 der optronischen Sensoren. Vom jeweiligen St er- und Führungssystem 36 werden die Energieversorgung 39 Steuereinheiten 40 sowie Positionsregelstufen 41 und Nachführgeräte 42 beeinflußt.

Aufgrund des Aufbaus und der Verbindungen kann das Kontrollzentrum 10 eine Bahnauswertung vornehmen und zwar auf der Basis einer Mehrstationen-Bahnvermessung ohne Entfernungsmessung. Eine Erfassung eines Objektes von zwei Stationen bekannten Abstandes erlaubt eine Erfassung nach der sog. Triangulation. Die erfaßten Positionsdaten bzw. Bahndaten können dabei bildhafte Informationen ( Video ) sein und als Echtzeitdaten unmittelbar verarbeitet werden. Die Objektinformationen können dabei auch spektr ( infrarot ) und / .der räumlich unterschieden werden und sowohl mit aktiven als auch mit passiven Sensoren erfaßt werden. Außerdem können den optronischen Sensoren 28,29, 30 auch Filmkameras zugeordnet werden, welche in Abhängigkeit außergewöhnlicher Ereignisse zur Aufnahme dieser Vorgänge zusätzlich einschaltbar sind.

Die mit dem Informationsverteilungs- und Verknüpfungssystem von den einzelnen Kontrollstationen 1,2,3,4 im Kontrollzentrum empfangenen Informationspakete können dort entsprechend aufbereitet und je nach Aufgabe in zugeordneten Rechnern verarbeitet werden um als Informationsergebnis in Form von Informationspaketen den Kontrollstationen zurücktesandt zu werden. Dort werden dann bestimmende Fernsteuerungsmaßnehmen von den Kontroll- und Führungseinheiten 12 bei den Objektträgern ausgelöst. In diesem Zusammenhang ist es auch möglich, das Kontrollzentrum 10 mit externen den Bahnkontrollprozeß stützenden In-

0112440

formationen ( Voreinweisung durch Radar, Telemetrie, vorerrechnete Bahndaten, Direktion-Finder usw. ) zu versorgen um dadurch eine schnellere Erfassung von Objekten zu erzielen. Außerdem ist es im Kontrollzentrum 10 auch möglich, eine Schnellauswertung der erfaßten Bahndaten in Form eines off-line-Prozesses durchzuführen.

0112440

8223-50                    2800 Bremen, den 26. November 1982
                           TWB 32/SM/He


           Vereinigte Flugtechnische Werke
           Gesellschaft mit beschränkter Haftung

_____

           Bahnvermessungs- und Überwachungssystem

_____


Patentansprüche


1)          Bahnvermessungs- und Überwachungssystem zur Erfassung
und Bewertung von Bahnen sich bewegender Objekte, dadurch g e k e n n-
z e i c h n e t, daß mehrere autonome, räumlich verteilte, mobile
und weitgehend automatische Bahnkontrollstationen optronische Sensoren
zur Objekterfassung und Verfolgung aufweisen und daß die Bahnkontrollstation über ein Informationsverteilungs- und Verknüpfungssystem zur
Echtzeitverarbeitung untereinander und mit einem Bahnkontrollzentrum
zur Koordination in Verbindung stehen.

2) Bahnvermessungs- und Überwachungssystem nach Anspruch 1, dadurch g e k e n n z e i c h n e t, daß jede Bahnkontrollstation aus einem die optronischen Sensoren tragenden Objektträger und einer Kontroll- und Führungseinheit besteht, welche über das Informationsverteilungs- und Verknüpfungssystem mit anderen Stationen kommuniziert und über Sensoren und Steuerkreise die optronischen Sensoren kontrolliert.

3) Bahnvermessungs- und Überwachungssystem nach Anspruch 1 oder 2, dadurch g e k e n n z e i c h n e t, daß die optronischen Sensoren auf optischer und elektrischer Basis Objektinformationen in Echtzeit erfassen und als bildhafte Informationen der Kontroll- und Führungseinheit zuleiten.

4) Bahnvermessungs- und Überwachungssystem nach einem der Ansprüche 1 bis 3, dadurch g e k e n n z e i c h n e t, daß die Objektinformationen spektralmäßig und / oder mit räumlicher Unterscheidung ausgesucht werden.

5) Bahnvermessungs- und Überwachungssystem nach einem der Ansprüche 1 bis 4, dadurch g e k e n n z e i c h n e t, daß für die optronischen Sensoren passive Sensoren eingesetzt sind, welche die von den jeweiligen Objekten ausgehende elektromagnetische Strahlung erfassen.

6) Bahnvermessungs- und Überwachungssystem nach einem der Ansprüche 1 bis 5, dadurch g e k e n n z e i c h n e t, daß neben den optronischen Sensoren zusätzliche Filmkamares auf dem Objektträger vorgesehen sind, welche über die Kontroll- und Führungseinheit in Abhängigkeit der mit den optronischen Sensoren erfaßten Informationen zur Aufnahme außergewöhnlicher Ereignisse einschaltbar sind.

7)     Bahnvermessungs- und Überwachungssystem nach einem der Ansprüche 1 bis 6, dadurch g e k e n n z e i c h n e t, daß die optronischen Sensoren derart ausgelegt sind, daß diese von der Kontroll- und Führungseinheit bezüglich bestimmter Parameter wie Fokussierung, Grauwertpegel, Polarität, Kontrast, Filterung usw. automatisch steuerbar sind.

8)     Bahnvermessungs- und Überwachungssystem nach einem der Ansprüche 1 bis 7, dadurch g e k e n n z e i c h n e t, daß der Objektträger und die Kontroll- und Führungseinheit zwei mechanisch getrennte Baueinheiten sind, und daß am Objektträger lediglich die zu seiner Einstellung notwendigen Stellorgane und Sensoren vorgesehen und von der Kontroll- und Führungseinheit energieversorgt und elektronisch  fernkontrollierbar sind.

9)     Bahnvermessungs- und Überwachungssystem nach einem der Ansprüche 1 bis 8, dadurch g e k e n n z e i c h n e t, daß der Objektträger aus drei trennbaren Baugruppen besteht, und zwar einer als Sockel wirkenden einstellbaren Azimuteinheit, einem damit verbundenen Ständer und einer auf dem Ständer drehbaren ausgebildeten Elevationseinheit.

10)     Bahnvermessungs- und Überwachungssystem nach einem der Ansprüche 1 bis 9, dadurch g e k e n n z e i c h n e t, daß die Azimuteinheit aus einem geschlossenen Lagergehäuse mit drei sternförmig angeordneten und Justiereinrichtungen aufweisenden Stützfüßen besteht, und daß innerhalb des durch einen reibungsarmen Lippendichtring abgedichteten Lagergehäuses ein Antriebsmotor, ein Tachogenerator, ein Lager, eine Kodiereinrichtung und eine Kabelführung untergebracht sind.

11)     Bahnvermessungs- und Überwachungssystem nach einem der Ansprüche 1 bis 10, dadurch g e k e n n z e i c h n e t, daß zur radialen und axialen Führung der Azimutachse ein Lager hoher Steifigkeit im Azimutgehäuse untergebracht ist und daß die in dem Lager angeordnete Azimutachse zur Kabelführung als Hohlachse ausgebildet ist.

12) Bahnvermessungs- und Überwachungssystem nach einem der Ansprüche 1 bis 11, dadurch g e k e n n z e i c h n e t, daß der Antriebsmotor und die Kodierungseinrichtung direkt auf der Hohlachse angeordnet sind.

13) Bahnvermessungs- und Überwachungssystem nach einem der Ansprüche 1 bis 12, dadurch g e k e n n z e i c h n e t, daß der Ständer als auswechselbare bedarfsabhängige Einheit unterschiedlicher Länge ausgebildet ist und planparallel geschliffene Flansche zum Anschluß an die Azimuteinheit bzw. die Elevationseinheit aufweist.

14) Bahnvermessungs- und Überwachungssystem nach einem der Ansprüche 1 bis 13, dadurch g e k e n n z e i c h n e t, daß die Elevationseinheit aus einem auf dem Ständer aufgesetzten Elevationslagerbock besteht, in dem eine direkt mit einem Motor, einem Tachogenerator und einer Kodiereinrichtung verbundene durchgehende Elevationsachse gelagert ist.

15) Bahnvermessungs- und Überwachungssystem nach einem der Ansprüche 1 bis 14, dadurch g e k e n n z e i c h n e t, daß der Elevationslagerbock Paßplatten zwischen sich und dem Ständer sowie auf beiden Stirnseiten aufweist.

16) Bahnvermessungs- und Überwachungssystem nach einem der Ansprüche 1 bis 15, dadurch g e k e n n z e i c h n e t, daß die Elevationsachse an ihren beiden Stirnseiten fest angeflanschte Sensorträger aufweist, die durch einen Steg brückenartig miteinander verbunden sind.

17) Bahnvermessungs- und Überwachungssystem nach einem der Ansprüche 1 bis 16, dadurch g e k e n n z e i c h n e t, daß der Ständer durch ein übergestreiftes dünnwandiges Rohr aus Lichtstrahlen reflektierendem Material vor Sonneneinstrahlung geschützt ist und daß die den Umwelteinflüssen ausgesetzten Bauteile aus witterungsbeständigen Werkstoffen hergestellt ist.

18) Bahnvermessungs- und Überwachungssystem nach einem der Ansprüche 1,2,7,8 , dadurch g e k e n n z e i c h n e t, daß die Kontroll- und Führungseinheit basismäßig mit elektronischen Einheiten zur Kontrolle des Objektträgers und der auf dem Objektträger angeordneten Sensoren ausgerüstet ist und daß eine aktuelle Kontrollaufgabe durch Dateneingabe und Verarbeitung mit den elektronischen Einheiten zugeordneten Rechnern steuerbar ist.

19) Bahnvermessungs- und Überwachungssystem nach einem der Ansprüche 1,2,7,8,18, dadurch g e k e n n z e i c h n e t, daß die auf dem Objektträger angeordneten Sensoren und der Objektträger selbst durch die in der Kontroll- und Führungseinheit untergebrachten elektronischen Einheiten vollständig kontrollierbar ( prüfen, eichen, einstellen, führen) sind.

20) Bahnvermessungs- und Überwachungssystem nach einem der Ansprüche 1,2,7,8,18,19,dadurch g e k e n n z e i c h n e t, daß die Kontroll- und Führungseinheit Bedienfelder und Anzeigegeräte aufweist und eine rechnergesteuerte Vor- und/oder Nachbehandlung erfaßter Bahn und/oder Sensordaten mit Ausgabe eines schriftlichen Protokolls durchführt.

21) Bahnvermessungs- und Überwachungssystem nach einem der Ansprüche 1,2,7,8,18 bis 20, dadurch g e k e n n z e i c h n e t, daß die Kontroll- und Führungseinheit mit elektronischen Steuergeräten zur manuellen und/oder automatischen Nachführung erfaßter Objekte versehen ist.

22)          Bahnvermessungs- und Überwachungssystem nach Anspruch 21, dadurch g e k e n n z e i c h n e t, daß die manuelle Nachführung erfaßter Objekte mit auf Video-Monitore dargestellten Video-Informationen und mit einem manuell steuerbaren Video-Nachführgerät ( Video-Tracker) erfolgt.

23)          Bahnvermessungs- und Überwachungssystem nach Anspruch 21, dadurch g e k e n n z e i c h n e t, daß die automatische Nachführung erfaßter Objekte durch eine rechnergesteuerte Bahnvermessung mit auf Video-Monitoren dargestellten Video-Informationen und einem automatisch steuerbaren Nachführgerät ( Video-Tracker ) erfolgt.

24)          Bahnvermessungs- und Überwachugnssystem nach einem der Ansprüche 21 bis 23, dadurch g e k e n n z e i c h n e t, daß die elektronische Ausrüstung der Kontroll- und Führungseinheiten, Baustufen für eine phasenkorrekte, synchrone und ereignisgesteuerte Datenverarbeitung aller erfaßter Bahndaten aufweist.

25)          Bahnvermessungs- und Überwachungssystem nach Anspruch 24, dadurch g e k e n n z e i c h n e t, daß die ereignisgesteuerte Datenverarbeitung langzeitig in Abhängigkeit einer hochgenauen mit einer Referenzzeit vergleichbaren Uhr erfolgt.

26)          Bahnvermessungs- und Überwachungssystem nach Anspruch 24, dadurch g e k e n n z e i c h n e t, daß die ereignisgesteuerte Datenverarbeitung durch diskrete Ereignisse z. B. Impulse des erfaßten Objektes, die allen Kontroll- und Führungseinheiten zugänglich sind, erfolgt.

27)          Bahnvermessungs- und Überwachungssystem nach Anspruch 24, dadurch g e k e n n z e i c h n e t, daß die ereignisgesteuerte Datenverarbeitung durch quasi kontinuierliche und über eine Datenberbindung den einzelnen Kontroll- und Führungseinheiten zugeleitete Ereignisse erfolgt.

28)          Bahnvermessungs- und Überwachungssystem nach Anspruch 27, dadurch g e k e n n z e i c h n e t, daß die quasi kontinuierlichen Ereignisse über das Informationsverteilungs- und Verarbeitungssystem vom Bahnkontrollzentrum den Kontroll- und Führungseinheiten zugeleitet sind.

29)          Bahnvermessungs- und Überwachungssystem nach Anspruch 27, dadurch g e   k e n n z e i c h n e t, daß die quasi kontinuierlichen Ereignisse über eine Satellitenfunkverbindung den Kontroll- und Führungseinheiten zugeleitet sind.

30)          Bahnvermessungs- und Überwachungssystem nach Anspruch 27, daudurch g e k e n n z e i c h n e t, daß die quasi kontinuierlichen Ereignisse durch ein terristisches überörtliches Sendersystem ( Video, Navigation ) den Kontroll- und Führungseinheiten zugeleitet sind.

31)          Bahnvermessungs- und Überwachungssystem nach Anspruch 1,2,7,8,18 bis 30, dadurch g e k e n n z e i c h n e t, daß die elektronische Ausrüstung der Kontroll- und Führungseinheiten bestimmte Daten zu Informationspaketen zusammenfaßt, verschlüsselt und über das Informationsverteilungs- und Verknüpfungssystem zum Kontrollzentrum überträgt bzw. davon erhält und entschlüsselt.

32)          Bahnvermessungs- und Überwachungssystem nach Anspruch 1,2,7,8,18 bis 30, dadurch g e k e n n z e i c h n e t, daß das Informationsverteilungs- und Verknüpfungssystem ein drahtloses Verbindungssystem ( Funkverbindung ) benutzt.

33) Bahnvermessungs- und Überwachungssystem nach Anspruch 1,2,7,8,18 bis 30, dadurch g e k e n n z e i c h n e t, daß das Informationsverteilungs- und Verknüpfungssystem ein Kabelverbindungssystem ( Koaxialkabel, Lichtleitfasern ) einschließt.

34) Bahnvermessungs- und Überwachungssystem nach einem der Ansprüche 1,2,7,8,18 bis 33, dadurch g e k e n n z e i c h n e t, daß das Kontrollzentrum mit elektronischen Geräten ausgerüstet ist, die eine Bahnauswertung aufgrund einer Mehrstationen-Bahnvermessung auf der Basis optronischer und / oder elektronsicher Sensoren mit und / oder ohne Entfernungsmessung erlauben.

35) Bahnvermessungs- und Überwachungssystem nach einem der Ansprüche 1,2,7,8,18 bis 34, dadurch g e k e n n z e i c h n e t, daß die von den Stationen übermittelten Informationsblöcke im Kontrollzentrum mit Aufbereitungsstufen verarbeitet und je nach Aufgabe in Rechnern entsprechend verknüpft sind um als Informationsblöcke zu den Stationen mit dem Informationsverteilungssystem übertragen werden um dort eine entsprechende Fernsteuerung und/oder Ferneinweisung auszulösen.

36) Bahnvermessungs- und Überwachungssystem nach einem der Ansprüche 1,2,7,8,18 bis 35, dadurch g e k e n n z e i c h n e t, daß das Kontrollzentrum externe den Bahnkontrollprozeß stützende Informationen ( Voreinweisunge durch Radar, Telemetrie, vorerrechnete Bahndaten, Direction-Finder usw. ) von übergeordneten Einheiten erhält und diesen die ausgewerteten Bahninformationen der erfaßten Objekte übermittelt.

37) Bahnvermessungs- und Überwachungssystem nach einnem der vorhergehenden Ansprüche, dadurch g e k e n n z e i c h - n e t, daß das Kontrollzentrum aus den erfaßten Bahndaten eine offline-  Schnellauswertung durchführt.

Fig. 1

IRIG
NVD
RTD

10
3
4
2
1
11
12
13
14

0112440

## Fig. 2

15     CGU     16     EOM$^2$

## Fig. 3

28
26
19
29
25
27
18
30
22
21
20
17
26

Fig. 4

TO / FROM TEST RANGE CENTER

| TRAJECTORY CONTROL CENTER TCC | | | 10 |
|---|---|---|---|
| PREPROCESSOR | VECTOR COMBINER | CENTRAL COMPUTER | |

| INFORMATION DISTRIBUTING AND LINKING SYSTEM IDLS | | | 13 |
|---|---|---|---|
| NOMINAL DATA VALUE NVD | REAL-TIME-DATA RTD | IRIG | |

1

MOBILE TRAJECTORY CONTROL STATION MTCS — 35

36 — CONTROL AND GUIDANCE UNIT CGU

37 — ELECTRO-OPTIC-MECHANIC-MOUNT EOM$^2$

39 — POWER ELECTRONICS

40 — CONTROL UNIT

28 — SENSORS

29 — OPTICS

41 — POSITION CONTROL COMPUTER PCC

42 — TRACKER

38 — COVER DOME

MTCS I

2 — MTCS II

3 — MTCS III

4 — MTCS IV

3 / 3

0112440